# EUROPÄISCHE PATENTSCHRIFT

(11) **EP 3 985 306 B1**
(45) Veröffentlichungstag und Bekanntmachung des Hinweises auf die Patenterteilung: **05.11.2025**
(21) Anmeldenummer: 21201416.1
(22) Anmeldetag: 07.10.2021
(51) Int. Cl.: F23D 14/02, F23N 5/10, F23N 5/18

(54) **VERFAHREN UND VORRICHTUNG ZUM SICHEREN BETRIEB EINES MIT HOHEM WASSERSTOFFANTEIL BETRIEBENEN BRENNERS**
METHOD AND DEVICE FOR SAFE OPERATION OF A BURNER OPERATED WITH A HIGH PROPORTION OF HYDROGEN
PROCÉDÉ ET DISPOSITIF DE FONCTIONNEMENT SÉCURISÉ D'UN BRÛLEUR FONCTIONNANT À HAUTE TENEUR EN HYDROGÈNE

(30) Priorität: 14.10.2020 DE 102020126992
(43) Veröffentlichungstag der Anmeldung: 20.04.2022
(73) Patentinhaber: Vaillant GmbH, 42859 Remscheid (DE)
(72) Erfinder: Plümke, Marco, 40589 Düsseldorf (DE); Badenhop, Thomas, 42499 Hückeswagen (DE)
(74) Vertreter: Popp, Carsten

(56) Entgegenhaltungen:
- WO-A1-2020/182902
- WO-A1-2020/197391
- US-A1- 2009 017 403

## Beschreibung

Die Erfindung betrifft den sicheren Betrieb eines Brenners, der mit einem Brenngas betrieben wird, welches einen sehr hohen Anteil an Wasserstoff, beispielsweise mehr als 95 Vol-% [Volumenprozent], insbesondere 98 bis 100 % enthält. Insbesondere geht es um Heizgeräte oder Brennwert-Heizgeräte, beispielsweise für die Erwärmung von Brauchwasser und/oder die Beheizung von Gebäuden.

Um in Zukunft den Ausstoß an Kohlendioxid zu verringern, wird angestrebt, Versorgungsnetze für Brenngas mit dekarbonisierten Gasen zu betreiben, wobei eine Möglichkeit dazu die Verwendung von Wasserstoff als Hauptbestandteil ist. Bei der Verbrennung von hochwasserstoffhaltigen Gasen, deren aliphatischer Anteil nur wenige Prozent beträgt, sind allerdings verschiedene Unterschiede gegenüber der Verbrennung von konventionellen Brenngasen, wie z. B. Erdgas, zu beachten.

Für einen sicheren Betrieb eines Brenners ist es einerseits erforderlich, sicherzustellen, dass immer eine Flamme vorhanden ist, wenn dem Brenner Brenngas zugeführt wird. Erlischt die Flamme unbemerkt, so kann Brenngas in einen Verbrennungsraum und in die Umgebung entweichen und möglicherweise sogar ein explosives Gemisch bilden, was unbedingt vermieden werden muss. Andererseits muss sichergestellt werden, dass (selbst bei Vorhandensein einer Flamme) zugeführtes Brenngas auch vollständig und umweltfreundlich verbrannt wird. Dazu wird das Verhältnis von Verbrennungsluft zu Brenngas (die sogenannte Luft-Zahl oder der Lambda-Wert) immer so geregelt, dass etwas mehr Verbrennungsluft vorhanden ist als zur vollständigen Verbrennung des Brenngases erforderlich ist. Ein geeignetes, sogenanntes überstöchiometrisches Verhältnis liegt beispielsweise bei einem Lambda-Wert von 1,2 bis 1,5 vor.

Bei Verwendung von aliphatischen Brenngasen (z. B. Methan, Propan, Butan) wird für die Überwachung des Vorhandenseins einer Flamme (Flammenwächter) und für die Regelung des Lambda-Wertes meist ein sogenanntes Ionisationsmessgerät eingesetzt. Das Vorhandensein eines Ionisationssignals zeigt an, dass eine Flamme vorhanden ist, von dem Ionisationssignal abgeleitete Messwerte in Verbindung mit der Messung des Massenstromes an zugeführter Luft ermöglichen eine Regelung des Lambda-Wertes durch Verstellung eines Brenngasventils. Ein geeigneter Massenstromsensor ist beispielsweise in der EP 1 144 958 B1 beschrieben.

Alle Vorgänge, bei denen ein Ionisationsstrom in der Flamme gemessen wird, funktionieren aber nicht bei der Verbrennung von Wasserstoff als Brenngas (auch nicht bei nur geringen Beimischungen aliphatischer Brennstoffe von wenigen Prozent). Außerdem ist die Flamme bei der Verbrennung von Wasserstoff für das menschliche Auge fast unsichtbar und auch nicht mit einfachen optischen Sensoren detektierbar. Eine mögliche Detektion im Ultraviolett-Bereich ist möglich, aber sehr aufwändig. Schließlich muss für einen sicheren Betrieb auch berücksichtigt werden, dass selbst ein Ausfall oder eine Fehlfunktion einzelner Teile, z. B. von Sensoren, nicht zu gefährlichen Situationen führen darf.

Die WO 2020/197391 A1 offenbart ein Verfahren zum Betrieb eines Brenners mit Luft und einem Brenngas, das mehr als 95 Vol-% Wasserstoff enthält. An einer Brenneroberfläche des Brenners befindet sich ein Temperatursensor, dessen Messwert kontinuierlich an eine Auswerte- und Regeleinheit weitergeleitet wird. Die Auswerte- und Regeleinheit überwacht den Messwert und sein zeitliches Verhalten und vergleicht die Werte mit vorgebbaren Sollbereichen. Bei Abweichungen von einem der Sollbereiche wird die Brenngaszufuhr verändert.

Aufgabe der vorliegenden Erfindung ist daher, die eingangs geschilderten Probleme zumindest teilweise zu überwinden und demnach insbesondere die Schaffung eines Verfahrens und einer Vorrichtung zum sichern Betrieb eines Brenners mit Luft und einem Brenngas, das mehr als 95 Vol-%, insbesondere mehr als 98%, Wasserstoff enthält. Es soll praktisch eine komplette Sicherheitsarchitektur für die Steuerung und Regelung eines Brenners bei Anwendung von Wasserstoff als Brenngas angegeben werden.

Zur Lösung dieser Aufgabe dienen ein Verfahren und eine Vorrichtung gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit der Zeichnung, veranschaulicht die Erfindung und gibt bevorzugte Ausführungsbeispiele an.

Hierzu trägt ein Verfahren zum Betrieb eines Brenners mit Luft und einem Brenngas, das mehr als 95 Vol-%, insbesondere 98 bis 100%, Wasserstoff enthält, bei, das das Vorhandensein einer Flamme in einem Verbrennungsraum mittels mindestens eines ersten Temperatursensors überwacht, dessen Messwert kontinuierlich oder quasikontinuierlich an eine Auswerte- und Regeleinheit weitergeleitet wird, wobei die Auswerte- und Regeleinheit den Messwert und sein zeitliches Verhalten überwacht und mit vorgebbaren Sollbereichen vergleicht, und bei Abweichungen von einem der Sollbereiche die Brenngaszufuhr beendet.

Es können hierfür in der Auswerte- und Regeleinheit Kalibrierdaten oder Kennfelder gespeichert sein oder verfügbar gemacht werden, mit denen weitergeleitete Messwerte und deren zeitliche Ableitungen verglichen werden können.

Zündet eine Flamme ordnungsgemäß, so wird von dem Temperatursensor ein Anstieg der Temperatur gemessen. Erlischt die Flamme, so wird ein Abfall der Temperatur gemessen. Überschreitet die Temperaturabsenkung pro Zeiteinheit einen vorher experimentell ermittelten Wert, so wird dies als Erlöschen der Flamme durch die Auswerte- und Regeleinheit interpretiert und das Brenngasventil geschlossen. Bei der Zündung des Brenners wird umgekehrt verfahren. Kommt es nach der Zündung zu keinem schnellen Temperaturanstieg an den Temperatursensoren, so kann auf eine Fehlzündung geschlossen werden. Steigt die Temperatur mit der erwarteten Geschwindigkeit, so wird der Zündvorgang als erfolgreich gewertet. Durch die Temperaturüberwachung kann sichergestellt werden, dass Wasserstoff verbrannt wird. Dies gilt insbesondere immer dann, wenn die Temperatur im Verbrennungsraum > 833 K [Kelvin] (Selbstzündungstemperatur von Wasserstoff) und das Luftverhältnis > 1 (Lambda-Wert > 1) ist. Das Verbrennungsluftverhältnis (Lambda) setzt die tatsächlich zur Verfügung stehende Luftmasse ins Verhältnis zur mindestens notwendigen Luftmasse, die für eine stöchiometrisch vollständige Verbrennung theoretisch benötigt wird. Durch die Temperaturüberwachung mit der Funktion eines Flammenwächters kann also sichergestellt werden, dass eine Verbrennung stattfindet bzw. eine Abschaltung erfolgt, falls die Flamme erlischt. Aussagen über die Güte der Verbrennung und/oder ob diese unterstöchiometrisch, also unvollständig abläuft, kann die Temperaturüberwachung allein ggf. noch nicht liefern.

Um eine sichere und vollständige Verbrennung von Wasserstoff zu erreichen, wird mindestens eine weitere Größe zur Überwachung und Regelung der Verbrennung eingeführt. Dazu wird die Luftzufuhr während des Betriebes für 0,5 bis 10 s [Sekunden], vorzugsweise 1 bis 5 s, insbesondere 2 bis 3 s, erhöht und die Reaktion des Temperaturmesswertes überwacht, wobei bei Ansteigen der Temperatur auf ein zu geringes Verhältnis von Luft zu Brennstoff geschlossen und die Luftzufuhr erhöht wird, bis die Temperatur abfällt. Eine bestimmte gemessene Temperatur kann bei zwei unterschiedlichen Lambda-Werten auftreten, nämlich bei einem unterstöchiometrischen Verhältnis oder einem überstöchiometrischen. Liegt ein (unerwünschtes) unterstöchiometrisches Verhältnis vor, so steigt die Temperatur bei Erhöhung der Luftzufuhr an, weil dann mehr Wasserstoff verbrannt wird. Bei einem überstöchiometrischen Verhältnis fällt die Temperatur ab, weil nun mehr Luft erwärmt werden muss. Man kann also beide Zustände leicht unterscheiden und die Luftzufuhr so lange erhöhen, bis ein überstöchiometrisches Verhältnis vorliegt und die Temperatur bei weiterer Erhöhung abfällt. Es lässt sich also eine Flammenüberwachung und Regelung des Lambda-Wertes mit nur einem Temperaturfühler durchführen. Besonders hohe Sicherheitsstandards und eine genaue Regelung lassen sich allerdings so noch nicht erfüllen.

In einer weiteren Ausgestaltung wird mittels eines ersten Massenstromsensors für Brenngas der Massenstrom an Brenngas und mittels eines ersten Massenstromsensors für Verbrennungsluft der Massenstrom an Verbrennungsluft an die Auswerte- und Regeleinheit geleitet und dort das Verhältnis aus beiden gebildet und in an sich bekannter Weise geregelt. Im Allgemeinen wird ein bestimmter Massenstrom an Verbrennungsluft vorgegeben, dem dann ein solcher Massenstrom an Verbrennungsgas beigemischt wird, wie für den gewünschten Lambda-Wert erforderlich ist. Für eine höhere Leistung des Brenners werden beide Massenströme im richtigen Verhältnis erhöht.

Aus Gründen der Redundanz und für einen höheren Sicherheitsstandard können Temperatursensor und Massenstromsensoren zweifach vorhanden sein, wobei die Messwerte von zweifach vorhandenen Sensoren untereinander verglichen und bei Abweichungen oberhalb eines vorgebbaren Schwellwertes eine Störmeldung und/oder Abschaltung ausgelöst wird. Insbesondere wird die Temperatur im Verbrennungsraum bzw. in der Flamme mit zwei Temperatursensoren gemessen. Die Messsignale werden durch separate Signalleitungen an die Auswerte- und Regeleinheit übermittelt. In der Auswerte- und Regeleinheit werden die gemessenen Temperaturen verglichen. Übersteigt die Temperaturdifferenz zwischen den Temperatursensoren einen definierten Schwellwert, so ist dies ein Indiz dafür, dass einer oder beide Temperatursensoren (oder deren Signalleitungen) defekt sind oder thermisch degradieren. Bevorzugt sind die Temperatursensoren baugleich und können beispielsweise als thermoelektrische Temperatursensoren (Thermoelemente) oder Widerstandsthermometer oder Gas- oder Flüssigkeitsthermometer ausgeführt sein. Auch Ausdehnungsthermometer können in Betracht kommen.

In einer besonderen Ausführungsform des Verfahrens wird bei Ausfall eines Massenstromsensors auf eine Regelung nur mit den Temperatursensoren wie oben beschrieben umgeschaltet. Eine solche Umschaltung kann auch zur Überprüfung der Funktionsfähigkeit der Massenstromsensoren dienen.

Gemäß einem weiteren Aspekt wird Vorrichtung zum Betrieb eines Brenners mit Verbrennungsluft und einem Brenngas, das mehr als 95 Vol-% Wasserstoff enthält, vorgeschlagen, welche in einem Verbrennungsraum mindestens einen ersten Temperatursensor als Flammenwächter aufweist, der über eine erste Signalleitung mit einer Auswerte- und Regeleinheit verbunden ist.

Zur Charakterisierung der Vorrichtung kann vollumfänglich auf die Erläuterungen zum Verfahren Bezug genommen werden, und umgekehrt.

Schon mit dieser Ausstattung lässt sich, wie oben beschrieben, eine Flammenüberwachung und eine einfache Einstellung eines geeigneten Lambda-Wertes durchführen. Je nach Bauart und Anforderungen kann der Temperatursensor im Bereich einer Verbrennungsflamme oder mit Abstand dazu angeordnet sein.

Bevorzugt werden aus Sicherheitsgründen ein erster und ein zweiter Temperatursensor als Flammenwächter eingesetzt, die mittels einer ersten und einer zweiten Signalleitung mit einer Auswerte- und Regeleinheit verbunden sind. So können Fehler in einem oder beiden Temperatursensoren oder deren Signalleitungen frühzeitig erkannt werden und eine Abschaltung der Brenngaszufuhr auslösen. Zwar können aus Redundanzgründen auch unterschiedliche Temperatursensoren eingesetzt werden, aber baugleiche Sensoren sind aus logostischen und technischen Gründen zu bevorzugen.

Bei einer typischen Ausführung eines Heizgerätes werden dem Brenner über eine Verbrennungsluftleitung und ein Gebläse Verbrennungsluft und über eine Brenngasleitung und ein Brenngasventil Brenngas zugeführt, wobei mindestens ein erster Massenstromsensor für Verbrennungsluft und mindestens ein erster Massenstromsensor für Brenngas vorhanden sind, die über eine erste Signalleitung des Massenstromsensors für Verbrennungsluft bzw. eine erste Signalleitung des Massenstromsensors für Brenngas mit der Auswerte- und Regeleinheit verbunden sind. Mit dieser Instrumentierung lässt sich der Lambda-Wert des dem Brenner zugeführten Gemisches für unterschiedliche gewünschte Leistungen genau einstellen.

Dabei sind bevorzugt das Gebläse über eine Signalleitung des Gebläses und das Brenngasventil über eine Signalleitung des Brenngasventils mit der Auswerte- und Regeleinheit verbunden, und die Auswerte- und Regeleinheit ist eingerichtet, das Verhältnis von Verbrennungsluft zu Brenngas anhand der Messwerte der Massenstromsensoren durch Einstellen der Leistung des Gebläses und der Öffnung des Brenngasventils bei unterschiedlichen Leistungen des Brenners auf ein vorgebbares Verhältnis von Verbrennungsluft zu Brenngas zu regeln.

Besonders sicher und zuverlässig wird das System, wenn ein erster und ein zweiter Massenstromsensor für Brenngas und ein erster und ein zweiter Massenstromsensor für Verbrennungsluft jeweils hintereinander angeordnet und jeweils über eine Signalleitung mit der Auswerte- und Regeleinheit verbunden sind.

Dabei ist es von Vorteil, wenn jeweils beide Sensoren in einem gemeinsamen Gehäuse mit gleichbleibendem Querschnitt zwischen den Sensoren angeordnet sind. Es können für solche Messungen handelsübliche Sensoren nach dem Stand der Technik eingesetzt werden.

In einer besonderen Ausführungsform ist die Auswerte- und Regeleinheit ausgelegt, die Messwerte von jeweils zwei gleichartigen Sensoren miteinander zu vergleichen und bei Abweichungen oberhalb eines vorgebbaren Schwellwertes eine Störmeldung und/oder eine Abschaltung zu bewirken. Dies erhöht die Sicherheit gegen Fehler in den Sensoren oder deren Zuleitungen.

Es kann ein Computerprogramprodukt vorgesehen sein, umfassend Befehle, die bewirken, dass die beschriebene Vorrichtung das beschriebene Verfahren ausführt. Im Allgemeinen wird eine Auswerte- und Regeleinheit mindestens einen Mikroprozessor und Datenspeicher enthalten, um die beschriebenen Vorgänge auszuführen. Dazu wird ein geeignetes Programm benötigt, welches auch bei Bedarf aktualisiert werden kann, ebenso wie gespeicherte Kalibrierdaten.

Ein schematisches Ausführungsbeispiel der Erfindung, auf das diese jedoch nicht beschränkt ist, und die Funktionsweise des erfindungsgemäßen Verfahrens werden im Folgenden anhand der Zeichnung näher erläutert. Es zeigen:
- Fig. 1:: schematisch den Aufbau eines Heizgerätes mit Sensorik und Auswerte- und Regeleinheit und
- Fig. 2:: ein Diagramm zum Verlauf der Temperatur einer Wasserstoffflamme eines Brenners in Abhängigkeit vom Lambda-Wert.

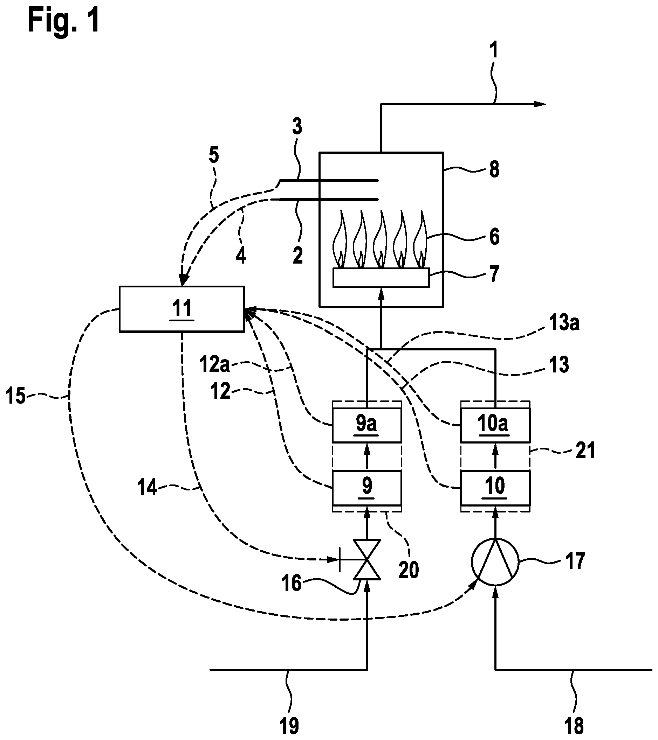

Fig. 1 zeigt ein für den Betrieb mit Wasserstoff als Brenngas ausgelegtes Heizgerät mit zugehöriger Sensorik. In einem Verbrennungsraum 8 ist ein Brenner 7 angeordnet, der beim Betrieb eine Wasserstoffflamme 6 erzeugt. Dem Brenner 7 wird ein Gemisch aus Brenngas (hier hauptsächlich bestehend aus Wasserstoff mit bis zu 5 % aliphatischem Brennstoff) und Verbrennungsluft zugeführt, wobei die Verbrennungsgase (hauptsächlich Wasserdampf und Stickstoff) über eine Abgasleitung 1 in die Umgebung entweichen können. In dem Verbrennungsraum 8 sind ein erster Temperatursensor 2 und ein zweiter Temperatursensor 3 angeordnet und jeweils über eine Signalleitung 4 des ersten Temperatursensors 2 und eine Signalleitung 5 des zweiten Temperatursensors 3 mit einer Auswerte- und Regeleinheit 11 verbunden. Die Auswerte- und Regeleinheit 11 ist auch mit einem Brenngasventil 16 über eine Signalleitung 14 für das Brenngasventil 16 und mit einem Gebläse 17 über eine Signalleitung 15 für das Gebläse 17 verbunden. Über eine Verbrennungsluftleitung 18 belangt Verbrennungsluft aus der Umgebung in das Gebläse 17 und von dort zum Brenner 7. Über eine Brenngasleitung 19 gelangt Brenngas zum Brenngasventil 16 und, sofern dieses geöffnet ist, von dort zum Brenner 7. Vor dem Brenner 7 werden Verbrennungsluft und Brenngas in einer hier nicht näher dargestellten Einrichtung (z. B. einer Venturidüse) gemischt.

Zur Messung des Massenstromes an Brenngas sind ein erster Massenstromsensor 9 und ein zweiter Massenstromsensor 9a vor oder hinter dem Brenngasventil 16 in Serie angeordnet. Beide sind mit jeweils zugehörigen Signalleitungen 12 bzw. 12a mit der Auswerte- und Regeleinheit 11 verbunden und bevorzugt in einem gemeinsamen ersten Gehäuse 20 mit gleichbleibendem Querschnitt zwischen den Massenstromsensoren 9, 9a angeordnet. Zur Messung des Massenstromes der Verbrennungsluft sind ein erster Massenstromsensor 10 und ein zweiter Massenstromsensor 10a in Serie vor oder hinter dem Gebläse 17 angeordnet und jeweils über Signalleitungen 13 bzw. 13a mit der Auswerteund Regelschaltung verbunden und bevorzugt in einem gemeinsamen zweiten Gehäuse 21 mit gleichbleibendem Querschnitt zwischen den Massenstromsensoren 10, 10a angeordnet.

Die Auswerte- und Regelschaltung 11 ist dazu eingerichtet, die Messwerte der Sensorpaare 2, 3 bzw. 9, 9a bzw. 10, 10a untereinander zu vergleichen und bei Abweichungen oberhalb eines Schwellwertes eine Störmeldung oder eine Abschaltung auszulösen. Bei korrekten Sensorwerten regelt die Auswerte- und Regeleinheit 11 den Lambdawert anhand der gemessenen Massenströme und schaltet das Heizgerät ab, falls die Temperatursensoren 2, 3 ein Erlöschen der Flamme 6 signalisieren. Bei Ausfall mindestens eines Massenstromsensors 9, 9a, 10 oder 10a kann eine Art Notbetrieb auch nur mit den Temperatursensoren 2, 3 in der oben beschriebenen Weise weitergeführt werden, indem periodisch der Verbrennungsluftanteil kurzfristig erhöht und die Reaktion der Temperatursensoren 2, 3 beobachtet wird, um sicherzustellen, das im überstöchiometrischen Bereich gearbeitet wird.

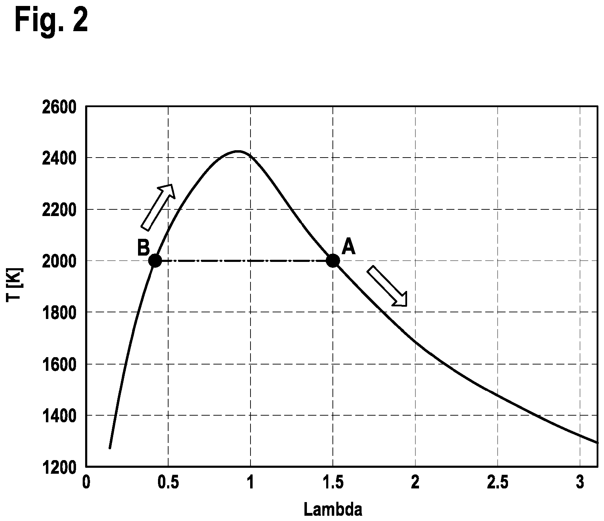

Einen solchen Vorgang veranschaulicht Fig. 2, die in einem Diagramm den Verlauf der adiabaten Verbrennungstemperatur T in Kelvin (Y-Achse) in Abhängigkeit von dem Lambda-Wert (X-Achse) zeigt. Bei Notbetrieb wird die Drehzahl des Gebläses 17 kurzzeitig erhöht und die Zumessung des Brenngases über das Brenngasventil 16 konstant gehalten. Nach dieser Erhöhung der Luftmenge sollte die Temperatur an den Temperatursensoren 2, 3 fallen, wenn am Punkt A (überstöchiometrisch) gemessen wird (durch Pfeile angedeutet). Sollte eine Temperaturerhöhung stattfinden, so ist dies ein sicheres Indiz dafür, dass die Verbrennung unterstöchiometrisch abläuft (Punkt B). In diesem Fall ist die Luftmenge weiter zu erhöhen, bis die Temperatur wieder abfällt. Sollte eine weitere Erhöhung der Luftmenge nicht mehr möglich sein, um in den überstöchiometrischen Bereich zu kommen, so ist das Brenngasventil 16 zu schließen und das Heizgerät verriegelnd abzuschalten, da ein sicherer Betrieb nicht mehr möglich ist. Die Auswerte- und Regeleinheit 11 gibt dann ein entsprechendes Störungssignal aus. Über die Temperaturmessung kann das ungefähre Luftverhältnis bestimmt werden.

In dem Beispiel von Fig. 2 entspricht die Temperatur 2000 K einem Lambda-Wert von 1,5. Da beim Betrieb mit (fast) reinem Wasserstoff (98 bis 100 Vol.-%) keine signifikanten Änderungen der Brennstoffqualität zu erwarten sind, kann die Temperaturmessung als Indikator für die Bestimmung des Luftverhältnisses Lambda dienen. Im Labor ist vorab der charakteristische Temperaturverlauf für den relevanten Lambda-Bereich des Brenners 7 für die gewählten Positionen der Temperatursensoren 2, 3 zu bestimmen und als Kennlinie in der Auswerte- und Regelungseinheit 11 zu hinterlegen. Durch den Vergleich der hinterlegten und im Betrieb gemessen Temperaturwerte kann auf das Luftverhältnis Lambda geschlossen werden.

Rechnerisch ergibt sich bei Anwendung bekannter Gleichungen, dass der stöchiometrische Massenfluss an Verbrennungsluft bei der Wasserstoffoxidation etwa 34mal größer sein muss als der Wasserstoffmassenstrom.

Es wird insbesondere vorgeschlagen, dass die Massenströme an den Massenstromsensoren 9 für Brenngas und Massenstromsensoren 10 für Verbrennungsluft miteinander verglichen werden. Wenn gilt, dass das Verhältnis der Massenströme größer 34 ist, kann davon ausgegangen werden, dass eine überstöchiometrische Verbrennung erfolgt. Für die Bestimmung des Verhältnisses wird der Quotient aus den gemessenen Massenströmen gebildet. Des Weiteren kann aus der Bildung des Verhältnisses auf das Luftverhältnis Lambda geschlossen werden. So kann ein gewünschtes Luftverhältnis für die Wasserstoffverbrennung eingeregelt werden.

Um eine sichere und überstöchiometrische Verbrennung zu gewährleisten, können verschiedene Sicherheitsabfragen in die Regelung des Luftverhältnisses implementiert werden. Dabei sind die Massenstromsensoren 9, 9a bzw. 10, 10a redundant ausgeführt. Es kann aber auch eine Kombination der vorgenannten Verfahren genutzt werden, wobei das Luftverhältnis nicht über redundante oder sicherheitsgerichtete Massenstromsensoren bestimmt und geregelt wird. Stattdessen wird das Luftverhältnis durch einfache (weniger sichere) Massenstromsensoren bestimmt und die überstöchiometrische Verbrennung durch die o.g. Temperaturüberwachung sichergestellt. Dabei werden von der Auswerte- und Regeleinheit 11 verschiedene Messwerte parallel interpretiert. Bei einer periodischen oder gelegentlichen Gebläsedrehzahlerhöhung wird die zugestellte Verbrennungsluftmenge erhöht, während die zugestellte Brennstoffmenge konstant beibehalten wird. Die Auswerteund Regeleinheit 11 prüft während dieses Vorganges, ob der Massenstromsensor 10 für Verbrennungsluft eine Erhöhung des Luftmassenstrom misst und die gemessen Temperaturen an den Temperatursensoren 2, 3 gleichzeitig abfallen. Trifft dieses Ereignis ein, so gilt der Plausibilitätscheck für den luftseitigen Massenstromsensor als bestanden. Die Plausibilität des Massestromsensors 9 für Brenngas kann mit einem vergleichbaren Verfahren geprüft werden. Durch schrittweises Schließen des Gasventils 16 bei konstanter Gebläsedrehzahl wird das Luftverhältnis ebenfalls zur überstöchiometrischen Seite hin verschoben. An den Temperatursensoren 2, 3 muss dann ein Temperaturabfall erkannt werden. Zudem muss der Massenstromsensor 9 für Brenngas eine Verringerung der Brennstoffmenge zurückmelden. Dadurch kann die Plausibilität des Massenstromsensors 9 für Brenngas geprüft werden.

Die vorliegende Erfindung erlaubt es, einen Verbrennungsprozess von Wasserstoff sicher zu regeln und auf Integrität seiner sicherheitsrelevanten Bauteile zu überprüfen, so dass bei Problemen rechtzeitig Störmeldungen oder eine Abschaltung ausgelöst werden können.

### Bezugszeichenliste

- 1: Abgasleitung
- 2: Erster Temperatursensor
- 3: Zweiter Temperatursensor
- 4: Signalleitung des ersten Temperatursensors
- 5: Signalleitung des zweiten Temperatursensors
- 6: (Wasserstoff-) Flamme
- 7: Brenner
- 8: Verbrennungsraum
- 9: Erster Massenstromsensor für Brenngas
- 9a: Zweiter Massenstromsensor für Brenngas
- 10: Erster Massenstromsensor für Verbrennungsluft
- 10a: Zweiter Massenstromsensor für Verbrennungsluft
- 11: Auswerte- und Regelungseinheit
- 12: Signalleitung des ersten Massenstromsensors für Brenngas
- 12a: Signalleitung des zweiten Massenstromsensors für Brenngas
- 13: Signalleitung des ersten Massenstromsensors für Verbrennungsluft
- 13a: Signalleitung des zweiten Massenstromsensors für Verbrennungsluft
- 14: Signalleitung für Brenngasventil
- 15: Signalleitung für Gebläse
- 16: Brenngasventil
- 17: Gebläse
- 18: Verbrennungsluftleitung
- 19: Brenngasleitung
- 20: Gemeinsames erstes Gehäuse für Massenstromsensoren für Brenngas
- 21: Gemeinsames zweites Gehäuse für Massenstromsensoren für Verbrennungsluft

## Patentansprüche

1. Verfahren zum Betrieb eines Brenners (7) mit Luft und einem Brenngas, das mehr als 95 Vol-% Wasserstoff enthält, wobei das Vorhandensein einer Flamme (6) in einem Verbrennungsraum (8) mittels mindestens eines ersten Temperatursensors (2) überwacht wird, dessen Messwert kontinuierlich oder quasikontinuierlich an eine Auswerte- und Regeleinheit (11) weitergeleitet wird, wobei die Auswerte- und Regeleinheit (11) den Messwert und sein zeitliches Verhalten überwacht und mit vorgebbaren Sollbereichen vergleicht, und bei Abweichungen von einem der Sollbereiche die Brenngaszufuhr beendet, und wobei weiter die Luftzufuhr während des Betriebes für 1 bis 10 s erhöht und die Reaktion des Messwertes des ersten Temperatursensors (2) überwacht wird, wobei bei Ansteigen der Temperatur auf ein zu geringes Verhältnis von Luft zu Brennstoff geschlossen und die Luftzufuhr erhöht wird, bis der Messwert abfällt.

2. Verfahren nach Anspruch 1, wobei mittels eines ersten Massenstromsensors (9) für Brenngas der Massenstrom an Brenngas und mittels eines ersten Massenstromsensors (10) für Verbrennungsluft der Massenstrom an Verbrennungsluft an die Auswerte- und Regeleinheit (11) geleitet und dort das Verhältnis aus beiden gebildet und geregelt wird.

3. Verfahren nach einem der vorhergehenden Ansprüche, wobei zumindest Temperatursensor (2, 3) oder Massenstromsensoren (9, 9a; 10, 10a) zweifach vorhanden sind, und wobei die Messwerte von zweifach vorhandenen Sensoren (2, 3; 9, 9a; 10,10a) untereinander verglichen und bei Abweichungen oberhalb eines vorgebbaren Schwellwertes zumindest eine Störmeldung oder Abschaltung ausgelöst wird.

4. Verfahren zum Betrieb eines Brenners (7) mit Luft und einem Brenngas, das mehr als 95 Vol-% Wasserstoff enthält, wobei das Vorhandensein einer Flamme (6) in einem Verbrennungsraum (8) mittels mindestens eines ersten Temperatursensors (2) überwacht wird, dessen Messwert kontinuierlich oder quasikontinuierlich an eine Auswerte- und Regeleinheit (11) weitergeleitet wird, wobei die Auswerte- und Regeleinheit (11) den Messwert und sein zeitliches Verhalten überwacht und mit vorgebbaren Sollbereichen vergleicht, und bei Abweichungen von einem der Sollbereiche die Brenngaszufuhr beendet, wobei
a) mittels eines ersten Massenstromsensors (9) für Brenngas der Massenstrom an Brenngas und mittels eines ersten Massenstromsensors (10) für Verbrennungsluft der Massenstrom an Verbrennungsluft an die Auswerte- und Regeleinheit (11) geleitet und dort das Verhältnis aus beiden gebildet und geregelt wird, und/oder
b) zumindest Temperatursensor (2, 3) und Massenstromsensoren (9, 9a; 10, 10a) zweifach vorhanden sind, und wobei die Messwerte von zweifach vorhandenen Sensoren (2, 3; 9, 9a; 10,10a) untereinander verglichen und bei Abweichungen oberhalb eines vorgebbaren Schwellwertes zumindest eine Störmeldung oder Abschaltung ausgelöst wird,
und bei Ausfall eines Massenstromsensors (9, 9a; 10, 10a) auf eine Regelung wie folgt umgeschaltet wird:
c) die Luftzufuhr wird während des Betriebes für 1 bis 10 s erhöht und die Reaktion des Messwertes des ersten Temperatursensors (2) wird überwacht, wobei bei Ansteigen der Temperatur auf ein zu geringes Verhältnis von Luft zu Brennstoff geschlossen und die Luftzufuhr erhöht wird, bis der Messwert abfällt.

5. Vorrichtung zum Betrieb eines Brenners (7) mit Verbrennungsluft und einem Brenngas, das mehr als 95 Vol-% Wasserstoff enthält, eingerichtet zur Durchführung eines Verfahrens nach einem der vorangehenden Ansprüche, wobei in einem Verbrennungsraum (8) mindestens ein erster Temperatursensor (2) als Flammenwächter vorhanden ist, der über eine erste Signalleitung (4) mit einer Auswerte- und Regeleinheit (11) verbunden ist.

6. Vorrichtung nach Anspruch 5, wobei ein erster Temperatursensor (2) und ein zweiter (3) Temperatursensor als Flammenwächter vorhanden und mittels einer ersten Signalleitung (4) und einer zweiten Signalleitung (5) mit der Auswerte- und Regeleinheit (11) verbunden sind.

7. Vorrichtung nach Anspruch 5 oder 6, wobei dem Brenner (7) über eine Verbrennungsluftleitung (18) und ein Gebläse (17) Verbrennungsluft und über eine Brenngasleitung (19) und ein Brenngasventil (16) Brenngas zugeführt wird, und wobei mindestens ein erster Massenstromsensor (10) für Verbrennungsluft und mindestens ein erster Massenstromsensor (9) für Brenngas vorhanden sind, die über eine erste Signalleitung (13) des ersten Massenstromsensors für Verbrennungsluft bzw. eine erste Signalleitung (12) des Massenstromsensors für Brenngas mit der Auswerte- und Regeleinheit (11) verbunden sind.

8. Vorrichtung nach einem der Ansprüche 5 bis 7, wobei das Gebläse (17) über eine Signalleitung (15) für Gebläse und das Brenngasventil (16) über eine Signalleitung (14) für Brenngasventil mit der Auswerte- und Regeleinheit (11) verbunden sind, und die Auswerte- und Regeleinheit (11) eingerichtet ist, das Verhältnis von Verbrennungsluft zu Brenngas anhand der Messwerte der Massenstromsensoren (9, 10) durch Einstellen einer Drehzahl des Gebläses (17) und einer Öffnung des Brenngasventils (16) bei unterschiedlichen vorgebbaren Leistungen des Brenners (7) auf ein vorgebbares Verhältnis von Verbrennungsluft zu Brenngas zu regeln.

9. Vorrichtung nach einem der Ansprüche 7 oder 8, wobei ein erster Massenstromsensor für Brenngas (9) und ein zweiter Massenstromsensor für Brenngas (9a) sowie ein erster Massenstromsensor für Verbrennungsluft (10) und ein zweiter Massenstromsensor für Verbrennungsluft (10a) jeweils hintereinander angeordnet und jeweils über eine Signalleitung (12, 12a; 13, 13a) mit der Auswerte- und Regeleinheit (11) verbunden sind.

10. Vorrichtung nach Anspruch 9, wobei der erste Massenstromsensor (9, 10) und zweite Massenstromsensor (9a, 10a) für Brenngas bzw. Verbrennungsluft jeweils in einem gemeinsamen Gehäuse (20; 21) angeordnet sind.

11. Vorrichtung nach einem der Ansprüche 6 bis 10, wobei die Auswerte- und Regeleinheit (11) ausgelegt ist, die Messwerte von jeweils zwei gleichartigen Sensoren (2, 3; 9, 9a; 10, 10a) miteinander zu vergleichen und bei Abweichungen oberhalb eines vorgebbaren Schwellwertes zumindest eine Störmeldung oder eine Abschaltung zu bewirken.

## Claims

1. Method for operating a burner (7) with air and a fuel gas which contains more than 95% by volume of hydrogen, wherein the presence of a flame (6) in a combustion chamber (8) is monitored by means of at least one first temperature sensor (2), the measured value of which is forwarded continuously or quasi-continuously to an evaluation and control unit (11), wherein the evaluation and control unit (11) monitors the measured value and its behaviour over time and compares it with predeterminable setpoint ranges and terminates the supply of fuel gas in the event of deviations from one of the setpoint ranges, and wherein the air supply is further increased for 1 to 10 s during operation and the reaction of the measured value of the first temperature sensor (2) is monitored, wherein, when the temperature rises, it is concluded that the ratio of air to fuel is too low and the air supply is increased until the measured value falls.

2. Method according to claim 1, wherein the mass flow of fuel gas is fed to the evaluation and control unit (11) by means of a first mass flow sensor (9) for fuel gas and the mass flow of combustion air is fed to the evaluation and control unit (11) by means of a first mass flow sensor (10) for combustion air, where the ratio of the two is formed and controlled.

3. Method according to one of the preceding claims, wherein at least temperature sensors (2, 3) or mass flow sensors (9, 9a; 10, 10a) are present in duplicate, and wherein the measured values of sensors (2, 3; 9, 9a; 10, 10a) present in duplicate are compared with one another and at least one fault signal or switch-off is triggered in the event of deviations above a predeterminable threshold value.

4. Method for operating a burner (7) with air and a fuel gas containing more than 95% by volume hydrogen, wherein the presence of a flame (6) in a combustion chamber (8) is monitored by means of at least one first temperature sensor (2), the measured value of which is forwarded continuously or quasi-continuously to an evaluation and control unit (11), the evaluation and control unit (11) monitoring the measured value and its behaviour over time and comparing it with predeterminable setpoint ranges, and terminating the supply of fuel gas in the event of deviations from one of the setpoint ranges, wherein
a) the mass flow of combustion gas is fed to the evaluation and control unit (11) by means of a first mass flow sensor (9) for combustion gas and the mass flow of combustion air is fed to the evaluation and control unit (11) by means of a first mass flow sensor (10) for combustion air, where the ratio of the two is formed and controlled, and/or
b) at least temperature sensor (2, 3) and mass flow sensors (9, 9a; 10, 10a) are present in duplicate, and wherein the measured values of sensors (2, 3; 9, 9a; 10, 10a) present in duplicate are compared with one another and at least one fault signal or switch-off is triggered in the event of deviations above a predeterminable threshold value,
and if a mass flow sensor (9, 9a; 10, 10a) fails, the system switches over to a control system as follows
c) the air supply is increased for 1 to 10 s during operation and the reaction of the measured value of the first temperature sensor (2) is monitored, whereby when the temperature rises it is concluded that the ratio of air to fuel is too low and the air supply is increased until the measured value falls.

5. Device for operating a burner (7) with combustion air and a fuel gas which contains more than 95% by volume hydrogen, set up for carrying out a method according to one of the preceding claims, wherein at least one first temperature sensor (2) is present in a combustion chamber (8) as a flame monitor, which is connected to an evaluation and control unit (11) via a first signal line (4).

6. Device according to claim 5, wherein a first temperature sensor (2) and a second (3) temperature sensor are present as a flame monitor and are connected to the evaluation and control unit (11) by means of a first signal line (4) and a second signal line (5).

7. Device according to claim 5 or 6, wherein combustion air is supplied to the burner (7) via a combustion air line (18) and a fan (17) and combustion gas is supplied via a combustion gas line (19) and a combustion gas valve (16), and wherein at least one first mass flow sensor (10) for combustion air and at least one first mass flow sensor (9) for combustion gas are present, which are connected via a first signal line (13) of the first mass flow sensor for combustion air and a first signal line (12) of the second mass flow sensor for combustion gas, respectively. a first signal line (12) of the mass flow sensor for combustion gas are connected to the evaluation and control unit (11).

8. Device according to one of claims 5 to 7, wherein the blower (17) is connected to the evaluation and control unit (11) via a signal line (15) for the blower and the combustion gas valve (16) is connected to the evaluation and control unit (11) via a signal line (14) for the combustion gas valve, and the evaluation and control unit (11) is set up to to regulate the ratio of combustion air to combustion gas on the basis of the measured values of the mass flow sensors (9, 10) by adjusting a speed of the fan (17) and an opening of the combustion gas valve (16) at different predeterminable outputs of the burner (7) to a predeterminable ratio of combustion air to combustion gas.

9. Device according to one of claims 7 or 8, wherein a first mass flow sensor for combustion gas (9) and a second mass flow sensor for combustion gas (9a) as well as a first mass flow sensor for combustion air (10) and a second mass flow sensor for combustion air (10a) are each arranged one behind the other and are each connected to the evaluation and control unit (11) via a signal line (12, 12a; 13, 13a).

10. Device according to claim 9, wherein the first mass flow sensor (9, 10) and second mass flow sensor (9a, 10a) for combustion gas or combustion air are each arranged in a common housing (20; 21).

11. Device according to one of claims 6 to 10, wherein the evaluation and control unit (11) is designed to compare the measured values of in each case two similar sensors (2, 3; 9, 9a; 10, 10a) with one another and, in the event of deviations above a predeterminable threshold value, to cause at least one fault signal or a switch-off.

## Revendications

1. Procédé de fonctionnement d'un brûleur (7) avec de l'air et un gaz combustible qui contient plus de 95 % en volume d'hydrogène, dans lequel la présence d'une flamme (6) dans un espace de combustion (8) est surveillée au moyen d'au moins un premier capteur de température (2) dont la valeur de mesure est transmise continuellement ou quasi continuellement à une unité d'évaluation et de régulation (11), dans lequel l'unité d'évaluation et de régulation (11) surveille la valeur de mesure et son comportement dans le temps et les compare avec des plages de consigne prédéfinissables, et met fin à l'apport en gaz combustible en cas d'écarts par rapport à l'une des plages de consigne, et dans lequel l'apport en air augmente encore pendant 1 à 10 s pendant le fonctionnement et la réaction de la valeur de mesure du premier capteur de température (2) est surveillée, dans lequel lorsque la température augmente, il est conclu à un rapport air/combustible trop faible et l'apport en air est augmenté jusqu'à ce que la valeur de mesure diminue.

2. Procédé selon la revendication 1, dans lequel le débit massique de gaz combustible est conduit au moyen d'un premier capteur de débit massique (9) pour gaz combustible et le débit massique d'air de combustion est conduit à l'unité d'évaluation et de régulation (11) au moyen d'un premier capteur de débit massique (10) pour air de combustion et le rapport entre les deux y est formé et régulé.

3. Procédé selon l'une quelconque des revendications précédentes, dans lequel au moins capteur de température (2, 3) ou capteur de débit massique (9, 9a ; 10, 10a) sont présents en double, et dans lequel les valeurs de mesure de capteurs (2, 3 ; 9, 9a ; 10, 10a) présents en double sont comparées entre elles et en cas d'écarts au-dessus d'une valeur seuil prédéfinissable, au moins un message d'erreur ou un arrêt est déclenché.

4. Procédé de fonctionnement d'un brûleur (7) avec de l'air et un gaz combustible qui contient plus de 95 % en volume d'hydrogène, dans lequel la présence d'une flamme (6) dans un espace de combustion (8) est surveillée au moyen d'au moins un premier capteur de température (2) dont la valeur de mesure est transmise continuellement ou quasi continuellement à une unité d'évaluation et de régulation (11), dans lequel l'unité d'évaluation et de régulation (11) surveille la valeur de mesure et son comportement dans le temps et les compare avec des plages de consigne prédéfinissables, et met fin à l'apport en gaz combustible en cas d'écarts par rapport à l'une des plages de consigne, dans lequel
a) le débit massique de gaz combustible est conduit au moyen d'un premier capteur de débit massique (9) pour gaz combustible et le débit massique d'air de combustion est conduit à l'unité d'évaluation et de régulation (11) au moyen d'un premier capteur de débit massique (10) pour air de combustion et le rapport entre les deux y est formé et régulé et/ou
b) au moins capteur de température (2, 3) et capteur de débit massique (9, 9a ; 10, 10a) sont présents en double, et dans lequel les valeurs de mesure de capteurs (2, 3 ; 9, 9a ; 10, 10a) présents en double sont comparées entre elles et en cas d'écarts au-dessus d'une valeur seuil prédéfinissable, au moins un message d'erreur ou un arrêt est déclenché,
et en cas de défaillance d'un capteur de débit massique (9, 9a ; 10, 10a) une régulation est commutée comme suit :
c) l'apport en air est augmenté pendant 1 à 10 s pendant le fonctionnement et la réaction de la valeur de mesure du premier capteur de température (2) est surveillée, dans lequel lorsque la température augmente, il est conclu à un rapport air/combustible trop faible et l'apport en air est augmenté jusqu'à ce que la valeur de mesure diminue.

5. Dispositif de fonctionnement d'un brûleur (7) avec de l'air de combustion et un gaz combustible qui contient plus de 95 % en volume d'hydrogène, conçu pour la mise en œuvre d'un procédé selon l'une quelconque des revendications précédentes, dans lequel au moins un premier capteur de température (2) est présent comme détecteur de flammes dans un espace de combustion (8), détecteur qui est relié à une unité d'évaluation et de régulation (11) par le biais d'une première ligne de signal (4).

6. Dispositif selon la revendication 5, dans lequel un premier capteur de température (2) et un second (3) capteur de température sont présents comme détecteurs de flammes et sont reliés à l'unité d'évaluation et de régulation (11) par le biais d'une première ligne de signal (4) et d'une seconde ligne de signal (5).

7. Dispositif selon la revendication 5 ou 6, dans lequel de l'air de combustion est fourni au brûleur (7) par le biais d'une conduite d'air de combustion (18) et d'une soufflante (17) et du gaz combustible est fourni par le biais d'une conduite de gaz combustible (19) et d'une soupape de gaz combustible (16), et dans lequel au moins un premier capteur de débit massique (10) pour de l'air de combustion et au moins un premier capteur de débit massique (9) pour gaz combustible sont présents, capteurs qui sont reliés à l'unité d'évaluation et de régulation (11) par le biais d'une première ligne de signal (13) du premier capteur de débit massique pour air de combustion ou d'une première ligne de signal (12) du capteur de débit massique pour gaz combustible.

8. Dispositif selon l'une quelconque des revendications 5 à 7, dans lequel la soufflante (17) est reliée à l'unité d'évaluation et de régulation (11) par le biais d'une ligne de signal (15) pour soufflante et la soupape de gaz combustible (16) est reliée par le biais d'une ligne de signal (14) pour soupape de gaz combustible, et l'unité d'évaluation et de régulation (11) est conçue afin de réguler le rapport air de combustion/gaz combustible à l'aide des valeurs de mesure des capteurs de débit massique (9, 10) en réglant une vitesse de rotation de la soufflante (17) et une ouverture de la soupape de gaz combustible (16) en cas de puissances prédéfinissables différentes du brûleur (7) à un rapport air de combustion/gaz combustible prédéfinissable.

9. Dispositif selon l'une quelconque des revendications 7 ou 8, dans lequel un premier capteur de débit massique pour gaz combustible (9) et un second capteur de débit massique pour gaz combustible (9a) ainsi qu'un premier capteur de débit massique pour air de combustion (10) et un second capteur de débit massique pour air de combustion (10a) sont agencés respectivement l'un derrière l'autre et sont reliés respectivement à l'unité d'évaluation et de régulation (11) par le biais d'une ligne de signal (12, 12a ; 13, 13a).

10. Dispositif selon la revendication 9, dans lequel le premier capteur de débit massique (9, 10) et le second capteur de débit massique (9a, 10a) pour gaz combustible ou air de combustion sont agencés respectivement dans un boîtier (20 ; 21) commun.

11. Dispositif selon l'une quelconque des revendications 6 à 10, dans lequel l'unité d'évaluation et de régulation (11) est conçue afin de comparer les valeurs de mesure respectivement de deux capteurs (2, 3 ; 9, 9a ; 10, 10a) similaires et de provoquer au moins un message d'erreur ou un arrêt en cas d'écarts au-dessus d'une valeur seuil prédéfinissable.
